# EUROPÄISCHE PATENTSCHRIFT

(11) **EP 1 056 793 B1**
(45) Veröffentlichungstag und Bekanntmachung des Hinweises auf die Patenterteilung: **18.06.2003**
(21) Anmeldenummer: 99913144.4
(22) Anmeldetag: 05.02.1999
(51) Int. Cl.: C08F 297/04

(54) **VERFAHREN ZUR HERSTELLUNG VON BLOCKCOPOLYMEREN DURCH RETARDIERTE ANIONISCHE POLYMERISATION**
METHOD FOR THE PRODUCTION OF BLOCK COPOLYMERS BY RETARDED ANIONIC POLYMERIZATION
PROCEDE DE FABRICATION DE COPOLYMERES SEQUENCES PAR POLYMERISATION ANIONIQUE RETARDEE

(30) Priorität: 18.02.1998 DE 19806785
(43) Veröffentlichungstag der Anmeldung: 06.12.2000
(73) Patentinhaber: BASF AKTIENGESELLSCHAFT, 67056 Ludwigshafen (DE)
(72) Erfinder: KNOLL, Konrad, D-67069 Ludwigshafen (DE); GAUSEPOHL, Hermann, D-67112 Mutterstadt (DE); WARZELHAN, Volker, D-67273 Weisenheim (DE); SCHADE, Christian, D-67061 Ludwigshafen (DE); FISCHER, Wolfgang, D-69190 Walldorf (DE)
(86) Internationale Anmeldenummer: EP9900774
(87) Internationale Veröffentlichungsnummer: WO99042506

(56) Entgegenhaltungen:
- EP-A- 0 234 512
- EP-A- 0 434 131
- WO-A-98/07765
- WO-A-98/07766
- US-A- 3 716 495
- US-A- 4 112 210
- US-A- 4 616 065

## Beschreibung

Die Erfindung betrifft ein Verfahren zur Herstellung von Blockcopolymeren aus vinylaromatischen Monomeren und Dienen.

Die anionische Polymerisation verläuft in der Regel sehr schnell, so daß ein Kontrolle wegen der beträchtlichen Wärmeentwicklung im technischen Maßstab schwierig wird. Erniedrigt man die Polymerisationstemperatur, so steigt die Viskosität insbesondere bei konzentrierten Lösungen zu stark an. Eine Verringerung der Initiatorkonzentration erhöht das Molekulargewicht des gebildeten Polymers. Eine Kontrolle der Reaktion durch eine entsprechende Verdünnung der Monomeren führt zu einem höheren Lösemittelbedarf und zu geringeren Raum-Zeitausbeuten.

Es wurden daher verschiedene Zusätze zu den anionischen Polymerisationsinitiatoren vorgeschlagen, die die Polymerisationsgeschwindigkeit beeinflussen.

Über den Einfluß von Lewissäuren und Lewisbasen auf die Geschwindigkeit der anionischen Polymerisation von Styrol wurde in Welch, Journal of the American Chemical Society, Vol 82 (1960), Seite 6000 - 6005 berichtet. So wurde gefunden, daß geringe Mengen von Lewis-Basen wie Ether und Amine die durch n-Butyllithium initiierte Polymerisation von Styrol bei 30°C in Benzol beschleunigen, wohingegen Lewis-Säuren wie Zink- und Aluminiumalkyle die Polymerisationsgeschwindigkeit reduzieren bzw. in überstöchiometrischen Mengen die Polymerisation zum Stillstand bringen.

Hsieh und Wang untersuchen in Macromolecules, Vol 19 (1966), Seite 299 bis 304 die Komplexbildung von Dibutylmagnesium mit dem Alkyllithiuminitiator bzw. der lebenden Polymerkette in Anwesenheit und Abwesenheit von Tetrahydrofuran und finden, daß Dibutylmagnesium die Polymerisationsgeschwindigkeit von Styrol und Butadien herabsetzt, ohne die Stereochemie zu beeinflussen.

Aus der US-Patentschrift 3 716 495 sind Initatorzusammensetzungen für die Polymerisation von konjugierten Dienen und Vinylaromaten bekannt, bei denen eine effektivere Nutzung des Lithiumalkyls als Initiator durch den Zusatz eines Metallalkyls eines Metalls der Gruppe 2a, 2b oder 3a des Periodensystems, wie beispielsweise Diethylzink und polare Verbindungen wie Ether oder Amine erreicht wird. Aufgrund der notwendigen hohen Lösungsmittelmengen, relativ niedrigen Temperaturen und langen Reaktionszeiten im Bereich von einigen Stunden sind die Raum-Zeit-Ausbeuten entsprechend niedrig.

Die WO97/3392 beschreibt Initatorzusammensetzungen für die anionische Polymerisation von Vinylmonomeren, die Alkali und Magnesiumverbindungen mit Kohlenwasserstoffresten enthalten und ein molares Verhältnis von [Mg]/[Alkalimetall] von mindestens 4 aufweisen.

Die nicht vorveröffentlichten Patentanmeldung PCT/EP97/04497 beschreibt kontinuierliche Verfahren zur anionischen Polymerisation oder Copolymerisation von Styrol- oder Dienmonomeren mit Alkalimetallalkyl als Polymerisationsauslöser in Gegenwart eines mindestens zweiwertig auftretenden Elements als Geschwindigkeitsregler.

Die ebenfalls nicht vorveröffentlichte Patentanmeldung PCT/EP97/04498 beschreibt Verfahren zur anionischen Polymerisation von Dienen und/oder vinylaromatischen Monomeren in einem vinylaromatischen Monomer oder Monomerengemisch in Gegenwart eines Metallalkyls oder -aryls eines mindestens zweiwertig auftretenden Elements ohne Zusatz von Lewisbasen.

Zur Polymerisation von konjugierten Dienen mit hoher 1,4-trans-Verknüpfung sind beispielsweise aus der EP-A 0 234 512 verschiedene Initiatormischungen bekannt, die Alkali-, Erdalkali-, Aluminium, Zink oder Seltenerdmetalle enthalten können. Die deutsche Offenlegungsschrift 26 28 380 lehrt z. B. die Verwendung von Erdalkalialuminaten als Cokatalysator zu einem lithiumorganischen Initiator zur Herstellung von Polymerisaten oder Copolymerisaten von konjugierten Dienen mit einem hohen Gehalt an trans-1,4-Bindungen und geringen Gehalten an 1,2- oder 3,4-Bindungen. Dies soll zu einer Erhöhung der Polymerisationsgeschwindigkeit führen.

Aufgabe der Erfindung war es, ein Verfahren zur Herstellung von Blockcopolymeren aus vinylaromatischen Monomeren und Dienen bereitzustellen, das die vorgenannten Nachteile nicht aufweist und insbesondere bei hohen Monomerkonzentrationen kontrolliert durchführbar ist.

Demgemäß wurde ein Verfahren zur Herstellung von Blockcopolymeren aus vinylaromatischen Monomeren und Dienen gefunden, wobei man die Monomeren in Gegenwart von mindestens einem Alkalimetallorganyl oder Alkalimetallalkoholat und mindestens einem Magnesium-, Aluminium- oder Zinkorganyl polymerisiert.

Als Alkalimetallorganyl können die üblicherweise als anionische Polymerisationsinitiatoren eingesetzten mono-, bi- oder multifunktionellen Alkalimetallalkyle, -aryle oder -aralkyle verwendet werden. Zweckmäßigerweise werden lithiumorganische Verbindungen eingesetzt wie Ethyl-, Propyl-, Isopropyl-, n-Butyl-, sec-Butyl-, tert.-Butyl-, Phenyl-, Diphenylhexyl-, Hexamethylendi-, Butadienyl-, Isoprenyl-, Polystyryllithium oder die multifunktionellen 1,4-Dilithiobutan, 1,4-dilithio-2-buten oder 1,4-Dilithiobenzol. Die benötigte Menge an Alkalimetallorganyl richtet sich nach dem gewünschten Molekulargewicht, der Art und Menge der weiteren, eingesetzten Metallorganyle sowie der Polymerisationstemperatur. In der Regel liegt sie im Bereich von 0,0001 bis 5 Molprozent bezogen auf Gesamtmonomerenmenge.

Als Alkalimetallalkoholate können aliphatische, aromatische oder araliphatische Alkoholate von Lithium, Natrium oder Kalium einzeln oder in Mischungen verwendet werden. Beispiele hierfür sind Lithium-, Natrium- oder Kaliummethanolat, - ethanolat, -n-propanolat, -isopropanolat, -n-butanolat, -sec-butanolat, -tert-butanoiat, -n-pentanolat, -isopentanolat, -hexanolat, -amylalkoholat, -phenolat, -mentholat, 2,4-di-tert-butylphenolat, 2,6-di-tert-butyiphenolat, 3,5-di-tert-butylphenolat, 2,4-di-tert-butyl-4-methyl-phenolat, -trimethylsilanoat. Bevorzugt werden die Methanolate, Ethanolate, tert.-butyl-substituierten Phenolate oder verzweigte Alkylalkoholate verwendet, insbesondere Lithium-tert-butylat, -amylat oder -3,7-dimethyl-3-octanoat.

Geeignete Magnesiumorganyle sind solche der Formel R₂Mg, wobei die Reste R unabhängig voneinander Wasserstoff, Halogen, C₁-C₂₀-Alkyl oder C₆-C₂₀-Aryl bedeuten. Bevorzugt werden die als Handelsprodukte verfügbaren Ethyl-, Propyl-, Butyl-, Hexyl- oder Octylverbindungen eingesetzt. Besonders bevorzugt wird das in Kohlenwasserstoffen lösliche (n-Butyl)(s-Butyl)magnesium eingesetzt.

Als Aluminiumorganyle können solche der Formel R₃Al verwendet werden, wobei die Reste R unabhängig voneinander Wasserstoff, Halogen, C₁-C₂₀-Alkyl oder C₆-C₂₀-Aryl bedeuten. Bevorzugte Aluminiumorganyle sind die Aluminiumtrialkyle. Besonders bevorzugt wird Triisobutylaluminium eingesetzt.

Als Zinkorganyle können solche der Formel R₂Zn verwendet werden, wobei die Reste R unabhängig voneinander Wasserstoff, Halogen, C₁-C₂₀-Alkyl oder C₆-C₂₀-Aryl bedeuten. Bevorzugte Zinkorganyle sind die Zinkdialkyle. Besonders bevorzugt wird Diethylzink eingesetzt.

Die Aluminium, Magnesium oder Zinkalkyle können auch ganz oder teilweise hydrolisiert, alkoholysiert oder aminolysiert vorliegen.

Besonders bevorzugt wird sec-Butyllithium in Verbindung mit Dibutylmagnesium oder Triisobutylaluminium verwendet.

Die molaren Verhältnisse der Metallorganyle untereinander können in weiten Grenzen variieren und richten sich vor allem nach der gewünschten Retardierungswirkung, der Polymerisationstemperatur, der Monomerzusammensetzung und -konzentration sowie dem gewünschten Molekulargewicht.

Das molare Verhältnis von Magnesium, Aluminium bzw. Zink zu Alkalimetall liegt bevorzugt im Bereich von 0,1 bis 100 liegt, bevorzugt im Bereich von 1 bis 10.

In einer bevorzugten Ausführungsform wird in Gegenwart eines Alkalimetallorganyls, eines Aluminiumorganyls und eines Magnesiumorganyls polymerisiert. Zweckmäßigerweise liegt das molare Verhältnis von Magnesium zu Alkalimetall im Bereich von 0,2 bis 3,8, das molare Verhältnis von Aluminium zu Alkalimetall im Bereich von 0,2 bis 4. Das molare Verhältnis von Magnesium zu Aluminium liegt bevorzugt im Bereich 0,005 bis 8

Bei dem erfindungsgemäßen Verfahren werden hauptsächlich Alkalimetallorganyle, Magnesium-, Aluminium- und Zinkorganyle eingesetzt. Bevorzugt sind Barium- Calcium- oder Strontiumorganyle nur in unwirksamen Mengen vorhanden, die die Polymerisationsgeschwindigkeit oder Copolymerisationsparameter nur unwesentlich beeinflussen. Auch sollen Übergangsmetalle oder Lanthanoide, insbesondere Titan oder Zinkon nicht in wesentlichen Mengen zugegen sein.

Die Alkalimetall-, Magnesium-, Aluminium- und Zinkorganyle können zusammen oder einzeln, zeitlich oder räumlich versetzt der Monomermischung zugegeben werden. Bevorzugt werden die Alkalimetall-, Magnesium- und Aluminiumalkyle als vorgemischte Initiatorzusammensetzung verwendet.

Zur Herstellung der Initatorzusammensetzung können die Alkalimetallorganyle, Magnesium-, Aluminium- und Zinkorganyle in einem inerten Kohlenwasserstoff, beispielsweise n-Hexan, Cyclohexan, Weißöl oder Toluol als Lösungsmittel gelöst und zusammengegeben werden. Vorzugsweise mischt man die in den Kohlenwasserstoffen gelösten Metallorganyle homogen und läßt mindestens 2 Minuten, bevorzugt mindestens 20 Minuten bei einer Temperatur im Bereich von 0 bis 120°C reifen. Gegebenenfalls kann hierzu ein Lösungsvermittler, beispielsweise Diphenylethylen zugegeben werden, um das Ausfallen einer der Komponenten aus dieser Initiatorlösung zu verhindern.

Das Initiatorsystem kann die Copolymerisationsparameter von vinylaromatischen Monomeren und Dienen beeinflussen. Je nach der Art und den Mengenverhältnissen der Metallorganyle erhält man daher Weichblöcke B oder B/S mit einem höheren oder geringeren Gehalt an vinylaromatischen Monomeren. Beispielsweise erhält man bei Verwendung von s-Butyllithium und Dibutylmagnesium und einem molaren Verhältnis Mg/Li unter 2 bei der Copolymerisation von Styrol und Butadien Butadienblöcke mit geringem Styrolanteil. Bei Verhältnissen von Mg/Li über 4 erhält man bevorzugt einen statistischen Butadien-Styrol-Weichblock B/S. Der statistische Styroleinbau wird ferner durch Verwendung von Alkoxyden wie Dialkylaluminiumalkoxiden oder Kaliumalkoxiden begünstigt.

Die relativen Polymerisationsgeschwindigkeiten von Styrol und Butadien werden durch die Retardierung kaum beeinflußt, d.h. Butadien wird sehr viel langsamer polymerisiert und wirkt in Mischung mit Styrol selbst retardierend auf die Bruttoumsatzgeschwindigkeit.

Bevorzugte Monomere sind Styrol, α-Methylstyrol, p-Methylstyrol, Ethylstyrol, tert.-Butylstyrol, Vinyltoluol oder 1,1-Diphenylethylen, Butadien, Isopren, 2,3-Dimethylbutadien, 1,3-Pentadien, 1,3-Hexadien oder Piperylen oder deren Mischungen.

Die Polymerisation kann in Gegenwart eines Lösungsmittels vorgenommmen werden. Als Lösungsmittel eignen sich die für die anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, Iso-Oktan, Benzol, Alkylbenzole wie Toluol, Xylol, Ethylbenzol oder Dekalin oder geeignete Gemische. Das Lösungsmittel sollte natürlich die verfahrenstypisch erforderliche hohe Reinheit aufweisen. Zur Abtrennung protonenaktiver Substanzen können sie beispielsweise über Aluminiumoxid oder Molekularsieb getrocknet und vor Verwendung destilliert werden. Vorzugsweise wird das Lösungsmittel aus dem Verfahren nach Kondensation und der genannten Reinigung wiederverwendet.

Durch die Zusammensetzung und Menge der Metallorganyle ist es möglich die Retardierungswirkung in weiten Temperaturbereichen einzustellen. So kann auch bei anfänglichen Monomerkonzentrationen im Bereich von 50 bis 100 Volumenprozent, insbesondere von 70 bis 100 Volumenprozent polymerisiert werden, die zu hochviskosen Polymerlösungen führen und zumindest bei höheren Umsätzen höhere Temperaturen verlangen.

Die Zielprodukte sind Blockcopolymere aus vinylaromatischen Monomeren und Dienen, bevorzugt werden Styrol-Butadien-Blockcopolymere erhalten.

Bevorzugt werden Blockcopolymere mit mindestens einem Hartblock S aus vinylaromatischen Monomeren und mindestens einem Weichblock B aus Dienen oder einem Weichblock S/B aus vinylaromatischen Monomeren und Dienen mit statistischer Abfolge. Die Weichblöcke können im wesentlichen aus Dienen (Weichblöcke B) oder aus Dienen und vinylaromatische Monomeren in statistischer Abfolge (Blöcke S/B) gebildet werden. Die einzelnen Blöcke können auch einen Monomergradienten aufweisen, beispielsweise Gradient B->S/B, Gradient (S/B)₁->(S/B)₂, Gradient B->S, Gradient (S/B)->S. Die Weichblöcke können auch aus verschiedenen Weichblöcken in beliebiger Reihenfolge zusammengesetzt sein und sich mehrmals wiederholen, beispielsweise Block B-S/B, Block (S/B)₁-(S/B)₂. Besonders bevorzugt werden die linearen Blockcopolymeren mit den Blockstrukturen S-B, S-B-S, S-S/B-S, S-B-S/B-S, S-S/B₁-S/B₂-S herstellt. Die einzelnen Blöcke können gleiche oder unterschiedliche Blocklängen aufweisen, das heißt die Dreiblockcopolymeren können symmetrisch oder unsymmetrisch sein.

Die Blockübergänge können hierbei scharf oder verschmiert sein, das bedeutet, im Übergangsbereich enthalten die Blöcke S einen erheblichen Anteil an einpolymerisierten Dienmonomeren und die Blöcke B einen erheblichen Anteil an einpolymerisierten vinylaromatischen Monomeren.

Die Blockcopolymeren weisen je nach Struktur und Zusammensetzung unterschiedliche Eigenschaften auf. Bevorzugte Blockcopolymere sind solche mit elastomeren Eigenschaften. Sie enthalten mindestens die Struktureinheit S-B-S oder S-S/B-S als lineares oder sternförmiges Blockcopolymer. Die Weichphase als Summe aller Weichblöcke liegt im Bereich von 50 bis 90 Volumenprozent, bevorzugt im Bereich von 60 bis 80, besonders bevorzugt im Bereich von 65 bis 75 Volumenprozent.

Weiter bevorzugt sind steife Blockcopolymere, die zugleich transparent schlagzäh sind. Sie enthalten ebenfalls mindestens die Struktureinheit S-B-S oder S-S/B-S als lineares oder sternförmiges Blockcopolymer. Die Weichphase als Summe aller Weichblöcke liegt im Bereich von 5 bis 50 Volumenprozent, bevorzugt im Bereich von 10 bis 40, besonders bevorzugt im Bereich von 15 bis 30 Volumenprozent. Besonders bevorzugt wird eine Blockstruktur S1-S/ B-S2 oder S₁-B->S₂ mit verschmiertem Übergang und einer Blocklänge von S1 zwischen 10000 und 30000 g/mol und einer Blocklänge von S2 von über 50000 g/mol.

Das erfindungsgemäße Verfahren kann in jedem druck- und temperaturfesten Reaktor durchgeführt werden, wobei es grundsätzlich möglich ist, rückvermischende oder nicht rückvermischende Reaktoren (d.h. Reaktoren mit Rührkessel- oder Rohrreaktor-Verhalten) zu verwenden. Das erfindungsgemäße Verfahren führt je nach Wahl der Initiatorkonzentration und -zusammensetzung, des speziell angewandten Verfahrensablaufs und anderer Parameter, wie Temperatur und evtl. Temperaturverlauf zu Polymerisaten mit hohem oder niedrigem Molgewicht. Geeignet sind zum Beispiel Rührkessel, Turmreaktoren, Schlaufenreaktoren sowie Rohrreaktoren oder Rohrbündelreaktoren mit oder ohne Einbauten. Einbauten können statische oder bewegliche Einbauten sein.

Bevorzugt führt man die die Polymerisation kontinuierlich durch. Hierfür eignen sich z. B. Rohrreaktoren oder Rohrbündelreaktoren mit oder ohne Mischelemente wie Sulzermischer, Rührkessel oder CSTR (Continuous stirred tank reactor ), Schlaufen- oder Kreislaufreaktoren, Turmreaktoren, List-Reaktor (selbstreinigend), Extruder etc.. Die Reaktoren können einzeln oder entsprechend kombiniert werden und mit ein oder mehreren Zuläufen, beispielsweise für Monomere oder Initiatoren ausgestattet werden.

Insbesondere wenn wenig oder kein Lösungsmittel zugesetzt wird, führt man einen Teil des Umsatzes, bevorzugt den Umsatz über 50 %, insbesondere über 70 %, bezogen auf die Gesamtmonomermenge in einem nicht rückvermischenden Reaktor oder Reaktorabschnitt durch. Beispielsweise eignen sich hierfür Rohr- und Rohrbündelreaktoren, Turmreaktoren oder Extruder. Vorzugsweise verwendet man einen Extruder, dessen Wellen zum Getriebe hin abgedichtet sind.

Mit der erfindungsgemäßen Initatorzusammensetzung läßt sich die Reaktionsgeschwindigkeit ohne Nachteile für die Polymereigenschaften gegenüber der anionischen Polymerisation mit einem Alkaliorganyl deutlich absenken bzw. die Temperatur erhöhen; dadurch wird es einerseits möglich, die Entwicklung der Polymerisationswärme über einen längeren Zeitraum zu verteilen und damit in einem kontinuierlichen Verfahren den zeitlichen bzw. - z.B. bei einem Rohrreaktor örtlichen - Temperaturverlauf einzustellen. Z.B. kann dafür gesorgt werden, daß bei anfänglich hoher Monomerkonzentration noch keine hohe Temperatur auftritt, andererseits ist bei der schließlich, d.h. bei einem weiter fortgeschrittenen Umsatz auftretenden hohen Temperatur eine ungestörte Polymerisation bei gleichzeitig hoher Raumzeitausbeute möglich.

Bei einer bevorzugten Verfahrensweise wird das vinylaromatische Monomer ohne weiteres Lösungsmittel (mit Ausnahme geringer Mengen die eventuell zur Lösung der Metallorganyle verwendet werden) in Gegenwart eines Alkalimetallorganyls und mindestens eines Magnesium-, Aluminium- oder Zinkorganyls polymerisiert. Nach einem Umsatz, der zur Bildung eines Hartblockes S gewünschter Blocklänge führt, wird das Dien zu der gegebenenfalls gekühlten Lösung des erhaltenene Blockes S in monomerem vinylaromatischem Monomer zugegeben. Die Zugabe des Diens kann auf einmal oder über einen längeren Zeitraum kontinuierlich oder in mehreren Portionen zugegeben werden. Nach Zugabe von Butadien und gegebenenfalls Erwärmen der Polymerisationslösung entsteht ein statistischer S/B-Block, dessen Gehalt an vinylaromatischen Monomeren stark vom gewählten Initiatorsystem abhängt. Mit zunehmende Polymerisation nimmt die Dienkonzentration ab und man erhält einen Gradienten in Richtung vinylaromatisches Monomer. Ist alles Dien verbraucht, polymerisiert das verbleibende vinylaromatische Monomer unter Bildung eines weiteren Blockes S. Vorzugsweise wird bis zum vollständigen Monomerenumsatz in einem Rohrreaktor oder Extruder polymerisiert. Wegen der zunehmenden Viskosität gegen Ende der Polymerisation sollte die Temperatur der Polymerschmelze für die Bildung des letzten Styrolblocks zweckmäßigerweise auf mindestens 20 - 30°C über der Glastemperatur des vinylaromatischen Polymers, also im Falle von Styrolpolymeren bei ca. über 130°C liegen. Nach Protonierung und Stabilisierung kann die Schmelze dann auf übliche Verarbeitungstemperaturen aufgeheizt werden (180 - 240 °C). Auf diese Weise sind z.B. symmetrische oder unsymmetrische Dreiblockcopolymere S-S/B-S mit zentralem Weichblock und einem verschmierten Dien-Vinylaromaten-Blockübergang zugänglich.

Besonders bevorzugt wird das Verfahren zur Herstellung eines Styrol-Butadien-Styroldreiblockcopolymeren verwendet, wobei man einen in monomerem Styrol gelösten Polystyrolblock durch teilweisen Umsatz von Styrol herstellt, durch Zugabe von Butadien einen butadienhaltigen Weichblock anfügt und bei Temperaturen von mindestens 20 °C über der Glastemperatur des entstandenen Blockcopolymeren das verbleibende Styrolmonomere bis zu vollständigem Umsatz polymerisieren läßt.

Die Blockcopolymeren können in Gegenwart eines mehrfunktionellen Alkalimetallorganyls polymerisiert oder nach der Polymerisation mit einem mehrfunktionellen Kopplungsmittel, wie polyfunktionelle Aldehyde, Ketone, Ester, Anhydride oder Epoxide sternförmig verknüpft werden. Hiebei können durch Kopplung gleicher oder verschiedener Blöcke symmetrische und unsymmetrische Sternblockcopolymere erhalten werden, deren Arme die oben genannten Blockstrukturen aufweisen können.

Nach Beendigung der Polymerisation können die lebenden Polymerketten anstelle einer Kopplung mit einem Kettenabbruchmittel verschlossen werden. Als Kettenabbruchmittel eignen sich protonenaktive Substanzen oder Lewis-säuren wie beispielsweise Wasser, Alkohole, aliphatische und aromatische Carbonsäuren sowie anorganische Säuren wie Kohlensäure oder Borsäure.

Gewöhnlich werden die Blockcopolymeren mit Stabilisatoren versetzt. Als Stabilisatoren eigene sich beispielsweise sterisch gehinderte Phenole wie Irganox ® 1076 oder Irganox ® 3052 der Firma Ciba-Geigy, Basel oder α-Tocopherol (Vitamin E).

Kettenabbruch und Stabilisierung können in getrennten Schritten oder auch in einem Schritt durchgeführt werden. Zu diesem Zweck kann beispielsweise eine Lösung einer Carbonsäure, wie Ameisensäure oder Essigsäure, eines Alkoholes, wie Methanol, Ethanol, Butanol, Propanol und eines der oben beschriebenen Stabilisators in einem geeigneten Lösungsmittel, wie Ethylbenzol verwendet werden.

Großtechnisch sinnvoll ist eine lösungsmittelfreie, flüssige Stabilisatordosierung. In diesem Fall wird zuerst die lebende Polymerschmelze mit 0,1 bis 5 Gew.-% Wasser, bezogen auf das Blockcopolymere, desaktiviert. Unmittelbar danach kann beispielsweise 25,6 g einer Mischung folgender Zusammensetzung pro kg Polymerschmelze dosiert werden:

| | | |
|---|---|---|
| Irganox 3052 | 13,7 % | Stabilisator |
| TNPP | 33,2 % | Stabilisator |
| Ölsäure | 53,1 % | Ansäuerung |

### Beispiele:

### Beispiel 1:

### Herstellung eines Styrol-Butadien-Blockcopolymers

4500 g Styrol wurden in einem 10 1 Rührkessel auf 12°C gekühlt. Bei dieser Temperatur wurden nacheinander 68 ml einer 0,5 molaren Dibutylmagnesiumlösung in Weißöl und 16 ml einer 1,6 molaren sec.-Butyllithiumlösung in Weißöl zugegeben und der Rührkessel langsam auf 30°C erwärmt. 44 Minuten nach der Initiatorzugabe stieg die Massetemperatur auf 53°C an. Der Feststoffgehalt betrug zu diesem Zeitpunkt 16,6 %. Hierauf wurde die Polymerisation des Styrolblocks durch Kühlung auf 30°C und Zugabe von 1500 g Butadien unterbrochen. Anschließend wurde der Rührkessel wieder langsam auf 70°C erwärmt, wobei eine exotherme Reaktion bei deutlich höherer Massetemperatur beobachtet wurde. 75 Minuten nach der Butadienzugabe wurde ein Feststoffgehalt von 35% bei einer Massetemperatur von 86°C erreicht. Der Gehalt an monomeren Butadien lag bei 2 bis 3 %. Anschließend wurde die Polymerisation durch Kühlung auf 15°C unterbrochen.

### Beispiel 2:

### Herstellung eines Styrol-Butadien-Styrol-Dreiblockcopolymers

Die nach Beispiel 1 erhaltenen, lebende Styrol-Butadienblockcopolymerlösung in Styrol wurde in einem Extruder weiterverarbeitet.

### Extruderaufbau:

Die Extrusion wurde auf einer ZSK 25 (W&P), L/D = 30, durchgeführt. Die Polymerisationszone war mit Knetelementen bestückt, anschließend folgte je ein Sperr- und ein Förderelement für die Dosierung von Abbruchmittel / Stabilisator sowie für Entgasung/Desodorierung und Austrag.

### Konditionierung des Extruders:

Zur Entfernung von Verunreinigungen und Feuchtigkeit wurde der Extruder mit einer ca. 0,1 molaren Mischung von sec.-Butyllithium in Weißöl und ca 0,5 Gew.-% Diphenylethylen zusammen mit Luflexen HX (Metallocen-katalysiertes Polyethylene der Firma BASF) gespült. Nachdem eine bleibende Rotfärbung des Luflexen/Weißölstranges erreicht wurde, wurde die Dosierung des Weißöl/sec.-Butyllithium-Gemisches gestoppt und die Dosierung des Luflexens so weit zurückgefahren, daß die Schnecke gerade noch nach hinten abgedichtet wurde.

### Polymerisation des zweiten Styrolblocks:

Anschließend wurden stündlich kontinuierlich 1,5 kg der Polymerisationsmischung aus Beispiel 1 mit einer Zahnradpumpe auf den Extruder dosiert. Der Extruder wurde mit 50 Umdrehungen pro Minute betrieben. An der Dosierstelle der lebenden Polymerlösung wurden 120°C, in der Polymerisationszone einschließlich Abbruchzone 140 und 150°C und im Entgasungsbereich 210 °C eingestellt.

Der ausgetragene farblose Strang wurde im Wasserbad gekühlt und granuliert. Der Reststyrolgehalt lag bei unter 100 ppm.

### Stabilisatorlösung:

Abbruch, Ansäuerung und Stabilisierung des Styrol-Butadien-Blockcopolymeren wurde in einem Schritt durchgeführt. Zu diesem Zweck wurden 100g einer Lösung mit der in Tabelle 1 angegebenen Zusammmensetzung nach der Polymerisationszone pro 1 kg Polymerschmelze zudosiert.

| | | |
|---|---|---|
| Irganox ®3052 | 3,5 % | Stabilisator |
| TNPP | 8,5 % | Stabilisator |
| Essigsäure | 1,9 % | Ansäuerung |
| Ethanol | 21,9 % | Abbruch der Anionen |
| Ethylbenzol | 64,3 % | Lösungsmittel zur Dosierung |

Das Beispiel wurde mit Durchsätzen von 2 und 2,5 kg/h wiederholt. Die Reststyrolgehalte lagen ebenfalls bei unter 100 ppm.

## Patentansprüche

1. Verfahren zur Herstellung von Blockcopolymeren aus vinylaromatischen Monomeren und Dienen in Gegenwart von mindestens einem Alkalimetallorganyl oder Alkalimetallalkoholat und mindestens einem Magnesium-, Aluminium- oder Zinkorganyl, **dadurch gekennzeichnet, daß** man bei einer anfänglichen Monomerenkonzentration im Bereich von 50 bis 100 Volumenprozent polymerisiert.

2. Verfahren nach Anspruch 1, **dadurch gekennzeichnet, daß** man als Alkalimetallorganyl ein Lithiumorganyl einsetzt.

3. Verfahren nach den Ansprüchen 1 oder 2, **dadurch gekennzeichnet, daß** das molare Verhältnis von Magnesium, Aluminium bzw. Zink zu Alkalimetall im Bereich von 0,1 bis 100 liegt.

4. Verfahren nach den Ansprüchen 1 bis 3, dadurch gekennzeichent, daß man Blockcopolymere mit mindestens einer Hartblock S aus vinylaromatischen Monomeren und mindestens einem Weichblock B aus Dienen oder einem Weichblock S/B aus vinylaromatischen Monomeren und Dienen mit statistischer Abfolge herstellt.

5. Verfahren nach den Ansprüchen 1 bis 4, **dadurch gekennzeichnet, daß** man Blockcopolymere, die die Blockstrukturen S-B-S, S-S/B-S, S-B-S/B-S, S-S/B₁-S/B₂-S enthalten, herstellt.

6. Verfahren nach Anspruch 5, **dadurch gekennzeichnet, daß** man lineare oder sternförmige Blockcopolymere mit einem Weichphasenanteil als Summe aller Weichblöcke im Bereich von 50 bis 90 Volumenprozent herstellt.

7. Verfahren nach Anspruch 5, **dadurch gekennzeichnet, daß** man lineare oder sternförmige Blockcopolymere mit einem Weichphasenanteil als Summe aller Weichblöcke im Bereich von 5 bis 50 Volumenprozent und unterschiedlichen Blocklängen der entständigen Hartblöcke S herstellt.

8. Verfahren nach den Ansprüchen 1 bis 7, **dadurch gekennzeichnet, daß** man die Blockcopolymeren in Gegenwart eines mehrfunktionellen Alkalimetallorganyls polymerisiert oder nach der Polymerisation mit einem mehrfunktionellen Kopplungsmittel sternförmig verknüpft.

9. Verfahren nach den Ansprüchen 1 bis 8 zur Herstellung eines Styrol-Butadien-Styroldreiblockcopolymeren, **dadurch gekennzeichnet, daß** man daß man einen in monomerem Styrol gelösten Polystyrolblock durch teilweisen Umsatz von Styrol herstellt, durch Zugabe von Butadien einen butadienhaltigen Weichblock anfügt und bei Temperaturen von mindestens 20°C über der Glastemperatur des entstandenen Blockcopolymeren das verbleibende Styrolmonomere bis zu vollständigem Umsatz polymerisieren läßt.

10. Verfahren nach den Ansprüchen 1 bis 9, **dadurch gekennzeichnet, daß** man die Polymerisation kontinuierlich durchführt.

11. Verfahren nach den Ansprüchen 1 bis 10, **dadurch gekennzeichnet, daß** man mindestens einen Teil des Umsatzes in einein nicht rückvermischenden Reaktor oder Reaktorabschnitt durchführt.

## Claims

1. A process for the preparation of block copolymers from vinylaromatic monomers and dienes in the presence of at least one alkali metal organyl or alkali metal alkoxide and at least one magnesium, aluminum or zinc organyl, which comprises carrying out the polymerization at an initial monomer concentration in the range from 50 to 100 percent by volume.

2. A process as claimed in claim 1, wherein the alkali metal organyl used is a lithium organyl.

3. A process as claimed in claim 1 or 2, wherein the molar ratio of magnesium, aluminum or zinc, respectively, to alkali metal is in the range from 0.1 to 100.

4. A process as claimed in any of claims 1 to 3, wherein block copolymers comprising at least one hard block S composed of vinylaromatic monomers and at least one soft block B composed of dienes or a soft block S/B composed of vinylaromatic monomers and dienes in random sequence are prepared.

5. A process as claimed in any of claims 1 to 4, wherein block copolymers comprising S-B-S, S-S/B-S, S-B-S/B-S, S-S/B1-S/B2-S block structures are prepared.

6. A process as claimed in claim 5, wherein linear or star block copolymers having a soft phase content, expressed as the sum of all soft blocks, in the range from 50 to 90 percent by volume are prepared.

7. A process as claimed in claim 5, wherein linear or star block copolymers having a soft phase content, expressed as the sum of all soft blocks, in the range from 5 to 50 percent by volume, and different block lengths of the terminal hard blocks S are prepared.

8. A process as claimed in any of claims 1 to 7, wherein the block copolymers are polymerized in the presence of a multifunctional alkali metal organyl or linked in a star-like manner after the polymerization using a multifunctional coupling agent.

9. A process as claimed in any of claims 1 to 8 for the preparation of a styrene-butadiene-styrene triblock copolymer, wherein a polystyrene block dissolved in monomeric styrene is prepared by partial conversion of styrene, a soft block comprising butadiene is added by addition of butadiene and the residual styrene monomer is polymerized at temperatures of at least 20°C above the glass transition temperature of the resulting block copolymer until conversion is complete.

10. A process as claimed in any of claims 1 to 9, wherein the polymerization is carried out continuously.

11. A process as claimed in any of claims 1 to 10, wherein at least a part of the conversion is carried out in a non-backmixing reactor or reactor section.

## Revendications

1. Procédé de préparation de copolymères blocs à partir de monomères vinyl-aromatiques et de diènes, en présence d'au moins un organyle de métal alcalin ou alcoolate de métal alcalin et d'au moins un organyle de magnésium, d'aluminium ou de zinc, **caractérisé en ce qu'**on polymérise à une concentration initiale en monomère de l'ordre de 50 à 100% en volume.

2. Procédé suivant la revendication 1, **caractérisé en ce qu'**on met en oeuvre, comme organyle de métal alcalin, un organyle de lithium.

3. Procédé suivant l'une des revendications 1 et 2, **caractérisé en ce que** le rapport molaire entre le magnésium, l'aluminium ou respectivement le zinc et le métal alcalin est de l'ordre de 0,1 à 100.

4. Procédé suivant l'une des revendications 1 à 3, **caractérisé en ce que** qu'on prépare des copolymères blocs ayant au moins un bloc dur S à base de monomères vinyl-aromatiques et au moins un bloc mou B à base de diènes ou un bloc mou S/B à base de monomères vinyl-aromatiques et de diènes, avec une suite statistique.

5. Procédé suivant l'une des revendications 1 à 4, **caractérisé en ce qu'**on prépare des copolymères blocs qui contiennent les structures de blocs S-B-S, S-S/B-S, S-B-S/B-S, S-S/B₁-S/B₂-S.

6. Procédé suivant la revendication 5, **caractérisé en ce qu'**on prépare des copolymères blocs linéaires ou en forme d'étoile ayant une fraction de phase molle, sous la forme de la somme de tous les blocs mous, de l'ordre de 50 à 90%en volume.

7. Procédé suivant la revendication 5, **caractérisé en ce qu'**on prépare des copolymères blocs linéaires ou en forme d'étoile ayant une fraction de phase molle, comme somme de tous les blocs mous, de l'ordre de 5 à 50% en volume et des longueurs de bloc différentes des blocs durs terminaux S.

8. Procédé suivant l'une des revendications 1 à 7, **caractérisé en ce qu'**on polymérise les copolymères blocs en présence d'un organyle de métal alcalin plurifonctionnel ou, après la polymérisation, on les relie en forme d'étoile avec un agent de couplage plurifonctionnel.

9. Procédé suivant l'une des revendications 1 à 8, pour la préparation d'un copolymère à trois blocs de styrène-butadiène-styrène, **caractérisé en ce qu'**on prépare un bloc de polystyrène dissous dans du styrène monomère par réaction partielle de styrène, on adjoint un bloc mou contenant du butadiène par addition de butadiène et, à des températures d'au moins 20°C au-dessus de la température de transition vitreuse du copolymère bloc formé, on laisse polymériser le monomère de styrène subsistant jusqu'à une réaction complète.

10. Procédé suivant l'une des revendications 1 à 9, **caractérisé en ce que** qu'on effectue la polymérisation de manière continue.

11. Procédé suivant l'une des revendications 1 à 10, **caractérisé en ce qu'**on effectue au moins une partie de la réaction dans un réacteur ou section de réacteur qui ne remélange pas.
